# EUROPÄISCHE PATENTANMELDUNG

(11) **EP 2 045 031 A1**
(43) Veröffentlichungstag der Anmeldung: **08.04.2009**
(21) Anmeldenummer: 07019309.9
(22) Anmeldetag: 02.10.2007
(51) Int. Cl.: B23B 31/113, B23D 61/10, B27B 5/32

(54) **Schnellwechsel-Spannvorrichtung für ein Rotationswerkzeug**

(71) Anmelder: Ledermann GmbH & Co. KG, 72160 Horb (DE)
(72) Erfinder: Katz, Otto, 72160 Horb (DE)
(74) Vertreter: Riedel, Peter

(57) **Zusammenfassung**

Die Erfindung betrifft eine Schnellwechsel-Spannvorrichtung für ein Rotationswerkzeug (1), insbesondere für ein Kreissägeblatt. Die Vorrichtung umfasst eine Nabe (2) mit einer senkrecht zu einer Drehachse (3) der Nabe (2) liegenden Spannfläche (4) für das Rotationswerkzeug (1), mindestens ein mit einer Vorspannkraft vorgespanntes Spannelement (5) zum Andrücken des Rotationswerkzeuges (1) gegen die Spannfläche (4), sowie eine um die Nabe (2) drehbar gelagerte Nockenscheibe (6) mit mindestens einem axial hervorstehenden, dem Spannelement (5) zugeordneten Nocken (7) zur bedarfsweisen Entspannung des Spannelementes (5). Die Nockenscheibe (6) weist eine Umfangsfläche (8) auf, wobei die Umfangsfläche (8) mit einer Ansatzeinrichtung (9) für ein Werkzeug (10) zum Drehen der Nockenscheibe (6) versehen ist. Es ist eine Blockiereinrichtung (11) zur wahlweisen Verhinderung einer Drehbewegung der Nabe (2) vorgesehen.

## Beschreibung

Die Erfindung betrifft eine Schnellwechsel-Spannvorrichtung für ein Rotationswerkzeug mit den Merkmalen nach dem Oberbegriff des Anspruchs 1.

Aus der DE 23 20 919 C3 ist eine Schnellwechsel-Spannvorrichtung für Rotationswerkzeuge bekannt, die eine Nabe mit einer senkrecht zu einer Drehachse der Nabe liegenden Spannfläche für das Rotationswerkzeug umfasst. Insgesamt vier federvorgespannte Spannelemente sind durch Langlöcher des als Kreissägeblatt ausgeführten Rotationswerkzeuges hindurchgeführt. Köpfe der Spannelemente drücken infolge ihrer Vorspannkraft das Rotationswerkzeug gegen die Spannfläche. Hierdurch ist im Betrieb eine sichere Drehmomentübertragung der Verbindung zwischen dem Rotationswerkzeug und der Nabe hergestellt.

Zum Auswechseln des Rotationswerkzeuges muss die Andrückkraft der Spannelemente aufgehoben werden. Hierzu ist eine um die Nabe drehbar gelagerte Nockenscheibe vorgesehen, die von einem außen liegenden, die Nockenscheibe umgreifenden Gehäuse geschützt ist. Die Nockenscheibe weist für jedes Spannelement je einen in axialer Richtung hervorstehenden Nocken auf. Diese können durch Relativdrehung der Nockenscheibe zur Nabe in Überdeckung mit den Spannelementen gebracht werden. An ihren der Nockenscheibe zugewandten Enden weisen die Spannelemente je ein Kugellager auf, dessen Außenring an den Nocken anliegt.

Bei einer Relativverdrehung der Nockenscheibe zur Nabe führt der Außenring des Kugellagers auf den zugeordneten Nocken eine Abrollbewegung aus und verschiebt dabei das Spannelement gegen dessen Federkraft. Der zugeordnete, am Rotationswerkzeug anliegende Kopf des Spannelementes wird abgehoben, so dass die Flächenpressung zwischen dem Rotationswerkzeug und der Spannfläche aufgehoben wird. Nach einer bajonettartigen Drehbewegung kann das Rotationswerkzeug von der Nabe abgenommen und ausgetauscht werden.

Der Antrieb der Nockenscheibe erfolgt über ein Zahnradpaar, welches seinerseits bei Bedarf über einen radial einzuführenden Steckschlüssel betätigt wird. Im praktischen Betrieb ist zu beobachten, dass sich trotz der Abschirmung durch das äußere Gehäuse Späne im Inneren der Schnellwechsel-Spannvorrichtung ansammeln können. Diese setzen sich insbesondere im Bereich der Antriebszahnräder fest, was zur Schwergängigkeit bis hin zur Blockierung führen kann. Ein Wechseln des Rotationswerkzeuges ist dann nur noch mit großem Aufwand möglich. Das umliegende Gehäuse erschwert eine Reinigung, so dass ein erheblicher Demontageaufwand erforderlich wird. Insgesamt ist der Aufbau aufwendig und kostenintensiv.

Der Erfindung liegt die Aufgabe zugrunde, eine gattungsgemäße Schnellwechsel-Spannvorrichtung derart weiterzubilden, dass sie bei vereinfachtem Aufbau eine erhöhte Betriebssicherheit aufweist.

Diese Aufgabe wird durch eine Schnellwechsel-Spannvorrichtung mit den Merkmalen des Anspruchs 1 gelöst.

Hierzu wird vorgeschlagen, dass die Nockenscheibe eine insbesondere in radialer Richtung frei liegende Umfangsfläche aufweist, wobei die Umfangsfläche mit einer Ansatzeinrichtung für ein Werkzeug zum Drehen der Nockenscheibe versehen ist, und dass eine Blockiereinrichtung zur wahlweisen Verhinderung einer Drehbewegung der Nabe vorgesehen ist.

Die Ansatzeinrichtung kann als paarweise ausgeführte Abflachung zum Ansetzen eines Schraubenschlüssels oder dergleichen ausgeführt sein. Vorteilhaft ist sie eine insbesondere als Bohrung ausgeführte Öffnung, wobei das Werkzeug ein zum Einführen in die Öffnung vorgesehener Hebel ist. Vergleichbares gilt auch für die Blockiereinrichtung der Nabe: Bevorzugt weist die Nabe eine einsbesondere als Bohrung ausgeführte Öffnung auf, wobei ein in die Öffnung einführbarer Hebel vorgesehen ist.

Die außenseitig an der Umfangsfläche vorgesehene Ansatzeinrichtung ist bedarfsweise leicht zu reinigen. Komplizierte Antriebsmechanismen, die sich mit Schmutz zusetzen könnten, fehlen vollständig. Spannen und Lösen des Rotationswerkzeuges erfolgen in einfacher Weise, indem die Werkzeugspindel bzw. die daran befestigte Nabe manuell mit dem einen Hebel blockiert wird, während mit dem anderen Hebel die Löse- bzw. Spannbewegung der Nockenscheibe relativ zur fixierten Nabe ausgeführt wird. Der Benutzer kann gleichzeitig beide Hebel fassen und gegeneinander bewegen, was ein ergonomisch günstiger Arbeitsablauf ist. Es ist eine leichte Betätigbarkeit gegeben, die wegen ihrer Verschmutzungsunempfindlichkeit bei nur geringem Pflegeaufwand dauerhaft erhalten bleibt. Das Fehlen eines die Nockenscheibe außenseitig umschließenden Gehäuses oder anderer Bauteile führt zu der außenseitig freiliegenden Umfangsfläche der Nockenscheibe. Dies setzt die Nockenscheibe zwar äußeren Einflüssen wie aufgewirbelte Späne aus. Späne oder dergleichen können sich jedoch nicht oder nur schwer an der Nockenscheibe festsetzen, sondern werden vielmehr im Betrieb infolge der wirkenden Fliehkräfte abgeschleudert. Es tritt eine Selbstreinigungswirkung auf, ohne dass diese durch ein Gehäuse oder dergleichen behindert werden würde.

Es kann zweckmäßig sein, dass die Nockenscheibe einen Gleitring oder dergleichen aufweist, mit der die Nockenscheibe gegen eine Stützplatte oder dergleichen abgestützt ist. In bevorzugter Weiterbildung liegt die Nockenscheibe auf ihrer dem Spannelement gegenüberliegenden Seite zumindest direkt angrenzend an ihre Umfangsfläche und insbesondere vollflächig an einer Stützplatte gleitend an. Die entstehende Stützwirkung trägt dazu bei, dass die manuelle Drehbewegung der Nockenscheibe mit geringen Reibungs- und Spielverlusten in eine axiale Spann- bzw. Entspannbewegung der Spannelemente umgesetzt ist. Die Anlage direkt im Umfangsbereich erzeugt eine spaltfreie Ausführung, die unempfindlich gegen Staub- und Schmutzbelastung ist.

In bevorzugter Weiterbildung sind die Nockenscheibe und die Stützplatte im Wesentlichen zylindrisch mit zumindest näherungsweise gleichem Außendurchmesser ausgeführt. Vorteilhaft gilt auch das Gleiche für einen Aufnahmeabschnitt der Nabe, in dem das mindestens eine Spannelement gehalten ist: Auch dieses ist zweckmäßig zylindrisch ausgeführt, wobei der Aufnahmeabschnitt und die Nockenscheibe einen zumindest näherungsweise gleichen Außendurchmesser aufweisen. Es entsteht eine insgesamt zylindrische Außenkontur ohne nennenswerte Winkel und Kanten, die wenig Angriffsfläche für Schmutz bietet. Dies trägt zur dauerhaften Leichtgängigkeit des Spannmechanismus bei.

In einer bevorzugten Ausführungsform weist das mindestens eine Spannelement eine gegen den zugeordneten Nocken der Nockenscheibe drückbare Gleitfläche auf. Zwischen dem Nocken und dem Spannelement findet beim Spann- bzw. Entspannvorgang eine Gleitbewegung statt, die ebenfalls verschmutzungsunempfindlich ist. Der Verzicht auf blockiergefährdete Rollen, Kugellager oder dergleichen vereinfacht die Konstruktion und steigert gleichzeitig deren Betriebssicherheit.

Die Gleitfläche weist vorteilhaft eine Schrägung auf und ist insbesondere als Kegel oder Kegelstumpf ausgeführt. Unabhängig von der Nockenform und der Ausrücklage kann eine definierte, zumindest näherungsweise zentrische Krafteinleitung sichergestellt werden. Diese ist verkantungsfrei und bleibt unabhängig von einer Drehwinkelposition des Spannelementes erhalten, so dass auf eine Drehsicherung verzichtet werden kann. Die Schrägung der Gleitfläche weist insbesondere einen Winkel zur Umfangsrichtung auf, der zumindest näherungsweise gleich dem Steigungswinkel des zugeordneten Nockens zur Umfangsrichtung ist. Hierdurch ist eine flächige Anlage mit geringer Flächenpressung und folglich geringem Verschleiß bzw. hoher Lebensdauer bewirkt.

Das Spannelement kann hydraulisch, pneumatisch oder dergleichen vorgespannt sein. In bevorzugter Weiterbildung ist das Spannelement als federvorgespannter Zapfen ausgeführt. Die Anordnung ist einfach im Aufbau und hält die Vorspannkraft im Betrieb ohne Fremdenergie zuverlässig aufrecht.

Es kann zweckmäßig sein, nur ein insbesondere zentrales Spannelement vorzusehen. In bevorzugter Weiterbildung sind mehrere und insbesondere drei über den Umfang gleichmäßig verteilte Spannelemente vorgesehen. Hierdurch ist eine gleichmäßige Flächenpressung zwischen dem Rotationswerkzeug und der Spannfläche der Nabe sichergestellt. Bei der bevorzugten Ausführung mit insgesamt drei Spannelementen entsteht ein statisch bestimmtes System, in dem das Rotationswerkzeug ohne die Gefahr einer Verspannung sicher fixiert ist.

Es kann zweckmäßig sein, das oder die Spannelemente direkt auf das Rotationswerkzeug einwirken zu lassen. In bevorzugter Weiterbildung wirkt das mindestens eine Spannelement auf eine der Spannfläche gegenüberliegende, insbesondere zylindrische Spannplatte ein, wobei eine Einspannung des Rotationswerkzeuges zwischen der Spannfläche und der Spannplatte vorgesehen ist. Das Rotationswerkzeug ist hierbei beidseitig flächig eingespannt, was die reibschlüssige Momentenübertragung verbessert. Spannungsspitzen sind vermieden. Dies trägt zur mechanischen Entlastung des Rotationswerkzeuges und auch zu dessen Rundlaufgenauigkeit bei.

Es kann zweckmäßig sein, das Rotationswerkzeug direkt an der Nabe zu zentrieren. In einer bevorzugten Ausführungsform weist die Spannplatte einen Zentrierbund für das Rotationswerkzeug auf. Dies vereinfacht den Montagevorgang, indem das Rotationswerkzeug zunächst auf die Spannplatte aufgelegt und dort zentriert wird. Anschließend ist lediglich eine Befestigung der zuvor gebildeten Baueinheit aus der Spannplatte und dem Rotationswerkzeug ohne zusätzliche Ausrichtungstätigkeiten mit den Spannelementen zu verbinden. Nach Lösen der Nockenscheibe ist die Anordnung einsatzbereit, ohne dass das Rotationswerkzeug während des Spannvorganges einer erhöhten Aufmerksamkeit für die Einnahme einer zentrierten Position bedarf.

Ein Ausführungsbeispiel der Erfindung ist im Folgenden anhand der Zeichnung beschrieben. Es zeigen:
- Fig. 1: in einer teilweise geschnittenen Seitenansicht eine er- findungsgemäße Schnellwechsel-Spannvorrichtung mit drei Spannelementen, einer auf die Spannelemente wirkenden Nockenscheibe und außenseitig angesetzten Hebeln zur Betätigung der Spannvorrichtung;
- Fig. 2: eine teilweise geschnittene Detaildarstellung der Anordnung nach Fig. 1 im Bereich eines Spannelementes im Wechselspiel mit einem an dessen Kopf gleitenden Nocken.

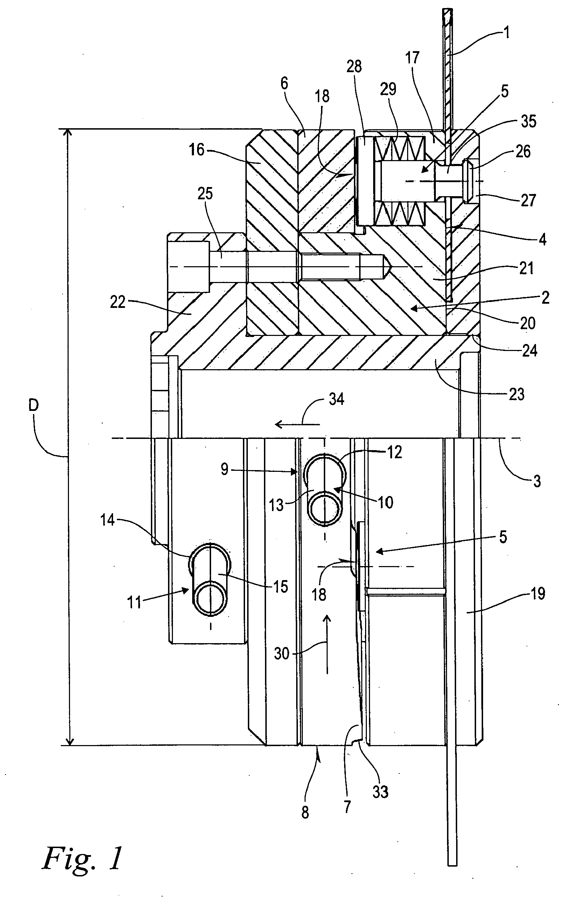

Fig. 1 zeigt in zur Hälfte geschnittener Seitenansicht eine erfindungsgemäße Schnellwechsel-Spannvorrichtung, die zur Montage auf einer nicht dargestellten Antriebsspindel vorgesehen ist. Die Schnellwechsel-Spannvorrichtung ist für die Einspannung eines Rotationswerkzeuges 1 vorgesehen, welches im gezeigten Ausführungsbeispiel ein Kreissägeblatt ist. Es können auch rotierende Fräser, beispielsweise zur Kantenumsäumung von holzartigen Werkstücken oder beliebige andere Rotationswerkzeuge vorgesehen sein. Die Schnellwechsel-Spannvorrichtung umfasst eine Nabe 2, an der das Rotationswerkzeug 1 eingespannt werden kann und gemeinsam mit dem Rotationswerkzeug 1 im Betrieb um eine Drehachse 3 drehbar ist. Die Nabe 2 ist mit einer senkrecht und koaxial zur Drehachse 3 angeordneten Spannfläche 4 versehen, an der das Rotationswerkzeug 1 mittels einer Spannplatte 19 angedrückt ist. Hierzu ist mindestens ein Spannelement 5 vorgesehen, welches in der Nabe 2 gehalten ist, und welches die Spannplatte 19 unter Zwischenlage des Rotationswerkzeuges 1 axial gegen die Spannfläche 4 drückt. Die erfindungsgemäße Spannvorrichtung weist bevorzugt mehrere Spannelemente 5 auf, die gleichmäßig über den Umfang der Spannvorrichtung verteilt sind. Im gezeigten Ausführungsbeispiel sind insgesamt drei Spannvorrichtungen 5 vorgesehen, die bezogen auf die Drehachse 3 in einem gleichmäßigen Winkelabstand von 120° zueinander im radialen Außenbereich der Nabe 2 angeordnet sind.

Konstruktive Einzelheiten der Nabe 2 sind wie folgt ausgestaltet: Die Nabe 2 umfasst ein radial inneres Nabenteil 22 mit einer einteilig ausgeformten, etwa zylindrischen Hülse 23, die zur Aufnahme der nicht dargestellten Werkzeugspindel vorgesehen ist. Radial außenseitig auf die Hülse 23 des inneren Nabenteils 22 ist ein radial äußeres Nabenteil 21 spielfrei aufgeschoben, wobei zwischen einer in Axialrichtung dem Rotationswerkzeug 1 abgewandten Stirnfläche des äußeren Nabenteils 21 und einem umlaufenden Flansch des inneren Nabenteils 22 eine Stützplatte 16 eingespannt ist. Das äußere Nabenteil 21, das innere Nabenteil 22 und die Stützplatte 16 sind in Axialrichtung durch über den Umfang verteilt angeordnete, durch den Flansch des inneren Nabenteils 22 hindurchgeführte Schrauben 25 miteinander verschraubt und verspannt.

Das radial äußere Nabenteil 21 weist im Querschnitt eine Stufenform auf, wodurch ein dem Rotationswerkzeug 1 zugewandter Aufnahmeabschnitt 17 gebildet ist, in dem die einzelnen Spannelemente 5 gehalten sind. Durch die Stufenform ist des weiteren zwischen dem Aufnahmeabschnitt 17 und der Stützplatte 16 ein Freiraum gebildet, in dem eine weiter unten näher beschriebene, kreisringförmige Nockenscheibe 6 koaxial zur Drehachse 3 angeordnet ist. Gegenüberliegend zur Nockenscheibe 6 ist das äußere Nabenteil 21 mit der Spannfläche 4 versehen, die sich umlaufend in radialer Richtung von der Hülse 23 bis zum Außenumfang des Aufnahmeabschnitts 17 erstreckt.

Die Spannplatte 19 ist als zylindrische Kreisscheibe mit einem radial inneren Zentrierbund 24 ausgestaltet und ebenso wie die Stützplatte 16 und das äußere Nabenteil 21 auf die Hülse 23 aufgeschoben. Hierbei ist die Spannplatte 19 mittels des inneren Zentrierbundes 24 auf der Hülse 23 zentriert. Des weiteren weist die Spannplatte 19 auf ihrer dem äußeren Nabenteil 21 bzw. dem Rotationswerkzeug 1 zugewandten Stirnfläche einen Zentrierbund 20 auf, dessen radial äußere Umfangsfläche in eine nicht näher bezeichnete Zentrieröffnung des Rotationswerkzeuges 1 eingreift. Hierdurch und im Zusammenspiel mit dem radial inneren Zentrierbund 24 ist das Rotationswerkzeug 1 gegenüber der Hülse 23 des inneren Nabenteils 22 und damit gegenüber der nicht dargestellten Werkzeugspindel im montierten Zustand zentriert.

Die einzelnen Spannelemente 5 können hydraulisch, pneumatisch oder dergleichen ausgestaltet sein und sind im gezeigten Ausführungsbeispiel als federvorgespannte Zapfen 35 mit zwei endseitigen Köpfen 26, 28 ausgeführt. Der jeweilige Zapfen 26 ist von der Seite der Nockenscheibe 6 aus in ein Senkloch hinein und durch eine dazu koaxiale Durchgangsbohrung mit kleinerem Durchmesser hindurchgeführt. Zwischen dem der Nockenscheibe 6 zugewandten Kopf 28 und dem Boden des Senkloches ist eine Druckfeder 29 angeordnet, die im gezeigten Ausführungsbeispiel als schematisch angedeutetes Tellerfederpaket ausgeführt ist.

Das durch die Durchgangsbohrung hindurchgeführte und über die Spannfläche 4 hervorstehende Ende des Zapfens 35 ist durch eine zugeordnete Öffnung des Rotationswerkzeuges 1 sowie durch eine weitere zugeordnete Öffnung der Spannplatte 19 hindurchgeführt, wobei der dem Kopf 28 gegenüberliegende Kopf 26 auf der Grundfläche einer Senkung 27 der Spannplatte 19 aufliegt. Hierbei steht die Druckfeder 29 unter Druckvorspannung, in dessen Folge der Kopf 26 gegen seine Andruckfläche der zylindrischen Senkung 27 gedrückt wird. Dies führt dazu, dass die Spannplatte 19 im Betrieb in Richtung eines Pfeiles 34 flächig gegen das Rotationswerkzeug 1 gedrückt wird, welches seinerseits ebenfalls in Richtung des Pfeiles 34 flächig gegen die Spannfläche 4 der Nabe 2 gedrückt wird. Das Rotationswerkzeug 1 ist demnach also zwischen der Spannfläche 4 und der Spannplatte 19 beidseitig reibschlüssig eingespannt, wobei der genannte Reibschluss das in Betrieb auftretende Antriebsmoment überträgt. Der der Nockenscheibe 6 zugewandte Kopf 28 ist noch mit einer der Nockenscheibe 6 zugewandten Gleitfläche 18 versehen, die in der hier gezeigten Betriebsposition zur Aufrechterhaltung der Spannkraft am Rotationswerkzeug 1 gegenüber der Nockenscheibe 6 einen geringen Abstand aufweist.

Bei Bedarf ist eine Entnahme bzw. ein Austausch des Rotationswerkzeuges 1 erforderlich, wozu die Vorspannkraft der Spannelemente 5 aufzuheben ist. Dies wird durch eine Relativdrehung der Nockenscheibe 6 gegenüber der Nabe 2 in Richtung eines Pfeiles 30 herbeigeführt. Die Nockenscheibe 6 ist auf ihrer den Spannelementen 5 zugewandten Stirnseite mit in axialer Richtung hervorstehenden Nocken 7 in gleicher Anzahl und Teilung wie die Spannelemente 5 versehen, wobei je ein Nocken 7 je einem Spannelement 5 zugeordnet ist. Axiale Stirnflächen der Nocken 7 steigen in axialer Richtung entgegen der durch den Pfeil 30 vorgegebenen Löserichtung an. Bei einer Relativverdrehung der Nockenscheibe 6 gegenüber der Nabe 2 in Richtung des Pfeiles 30 gerät die jeweilige ansteigende Nockenfläche in Kontakt mit der zugeordneten Gleitfläche 18 des Zapfens 35. Bei weiterer Drehung der Nockenscheibe 6 in Richtung des Pfeiles 30 führt der ansteigende Nockenverlauf dazu, dass der jeweilige Zapfen 35 mittels der am Kopf 28 befindlichen Gleitfläche 18 entgegen der durch den Pfeil 34 angegebenen Spannrichtung ausgerückt wird, wobei der gegenüberliegende Kopf 26 von seiner Anlagefläche in der Senkung 27 abgehoben wird.

Hierbei ist die am Rotationswerkzeug 1 zwischen der Spannplatte 19 und der Spannfläche 4 wirkende Vorspannkraft aufgehoben. Die jeweiligen Durchführungsöffnungen in der Spannplatte 19 sind einschließlich ihrer Senkungen 27 in Form von bajonettartigen Langlöchern ausgeführt, deren Durchmesser in einem nicht dargestellten Endbereich hinreichend groß für die Durchführung des Kopfes 26 ist. Im entspannten Zustand kann die Spannplatte 19 bajonettartig gedreht und gemeinsam mit dem Rotationswerkzeug 1 in axialer Richtung abgenommen werden. Eine Montage erfolgt in umgekehrter Reihenfolge: Zunächst wird das Rotationswerkzeug 1 auf den Zentrierbund 20 der Spannplatte 19 aufgeschoben und gemeinsam mit dieser an den Köpfen 26 der Zapfen 35 verriegelt. Anschließend wird die Nockenscheibe 6 entgegen dem Pfeil 30 relativ zur Nabe 2 zurück gedreht, wobei sich die axiale Vorspannkraft zwischen der Spannplatte 19 und der Spannfläche 4 am Grundkörper des Rotationswerkzeuges 1 aufbaut.

Die Nockenscheibe 6 ist im Wesentlichen zylindrisch aufgebaut und weist eine in radialer Richtung frei liegende, zylindrische Umfangsfläche 8 auf. Auch die Stützplatte 16, der Aufnahmeabschnitt 17 des äußeren Nabenteils 21 und die Spannplatte 19 haben eine zylindrische Außenkontur. Dabei weisen die vorgenannten Bauteile jeweils Außendurchmesser D auf, die untereinander im Wesentlichen identisch sind, und die auch im Wesentlichen identisch zu einem Außendurchmesser D der Nockenscheibe 6 sind. Dies und das Fehlen eines äußeren Gehäuses führt dazu, dass die zylindrische Umfangsfläche 8 über ihren gesamten Umfang und in ihrer gesamten axialen Erstreckung frei liegt, also nicht abgedeckt ist. Mit Ausnahme des Bereichs des inneren Nabenteils 22 ergibt sich damit eine insgesamt zylindrische Kontur der Nabe 2.

Zur Betätigung der erfindungsgemäßen Schnellwechsel-Spannvorrichtung ist die Umfangsfläche 8 der Nockenscheibe 6 mit einer Ansatzeinrichtung 9 für ein Werkzeug 10 zum Drehen der Nockenscheibe 6 versehen, während gleichzeitig eine Blockiereinrichtung 11 zur wahlweisen Verhinderung einer Drehbewegung der Nabe 2 bzw. der durch sie hindurchgeführten Werkzeugspindel vorgesehen ist. Die Ansatzeinrichtung 9 an der Nockenscheibe 6 kann eine paarweise ausgeführte Abflachung zum Ansetzen eines Schraubenschlüssels oder dergleichen sein und ist im gezeigten Ausführungsbeispiel als radiale Öffnung 12 ausgeführt. Die Öffnung 12 kann ein Vierkant oder dergleichen sein und ist im gezeigten Ausführungsbeispiel eine zylindrische Bohrung, während das Werkzeug 10 als zylindrischer Hebel 13 ausgeführt ist. Sinngemäß das Gleiche gilt auch für die Blockiereinrichtung 11: Zur Bildung dieser Blockiereinrichtung 11 ist die Nabe 2 an ihrem inneren Nabenteil 22 mit einer als radiale Bohrung ausgeführten Öffnung 14 versehen, wobei ein zylindrischer, in die Öffnung 14 einführbarer Hebel 15 vorgesehen ist. Anstelle der Bohrung 14 in der Nabe 2 und des darin hineingesteckten Hebels 15 kann aber auch eine maschinenseitige Spindelarretierung oder dergleichen zweckmäßig sein.

Im Betrieb sind die Hebel 13, 15 aus den zugeordneten Öffnungen 12, 14 herausgenommen. Beim Stillstand der Maschine und beim Auswechseln des Rotationswerkzeuges 1 werden die Hebel 13, 15 in die Öffnungen 12, 14 eingesteckt und mit je einer Hand des Benutzers erfasst. Mit der den nabenseitigen Hebel 15 greifenden Hand wird eine Drehung der Werkzeugspindel mit der Nabe 2 blockiert bzw. verhindert, während mit der den Hebel 13 greifenden Hand die Nockenscheibe 6 in Richtung des Pfeiles 30 oder in Gegenrichtung relativ zur Nabe 2 verdreht wird. Hierdurch tritt die zuvor beschriebene Entspannung bzw. Einspannung des Werkzeuges 1 an der Nabe 2 ein.

Der zur Hälfte geschnittenen Darstellung nach Fig. 1 ist noch zu entnehmen, dass die Nockenscheibe 6 auf ihrer dem Spannelement 5 gegenüberliegenden Stirnseite zumindest im Umfangsbereich flächig an der Stützplatte 16 gleitend anliegt. Im gezeigten Ausführungsbeispiel ist eine vollflächige Anlage an der Stützplatte 16 von radial innen bis radial außen direkt angrenzend an die Umfangsfläche 8 vorgesehen, so dass keine Spalte oder dergleichen gebildet sind, in denen sich Späne, Schmutz oder dergleichen festsetzen können. Die gleitende Anlage bewirkt, dass die Nockenscheibe 6 unter Beibehaltung ihrer Drehbeweglichkeit die vorstehend beschriebene axiale Kraft auf die Zapfen 35 entgegen des Pfeiles 34 aufbringen kann, wobei die Stützplatte 16 die entsprechend gegenhaltende Kraft auf die Nockenscheibe 6 aufbringt.

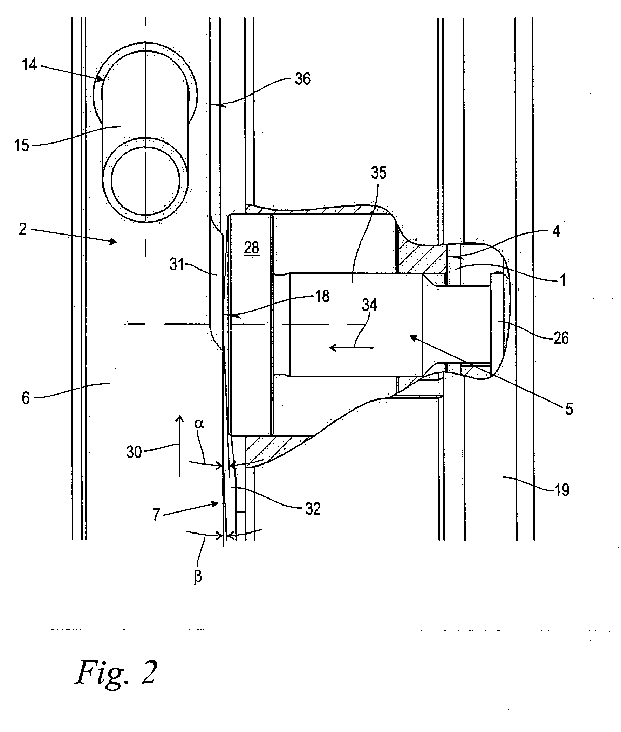

Fig. 2 zeigt eine teilweise geschnittene Detaildarstellung der Anordnung nach Fig. 1 im Bereich eines einzelnen Spannelementes 5. Es ist zu erkennen, dass die Nockenscheibe 6 auf ihrer den Spannelementen 5 zugewandten Stirnseite eine ebene, senkrecht zur Drehachse 3 (Fig. 1) liegende Grundfläche 36 aufweist, von der ausgehend sich die Nocken 7 in axialer Richtung erheben. In Richtung der durch den Pfeil 30 angegebenen Löserichtung ist der Nocken 7 durch einen Absatz 31 begrenzt, während er in Gegenrichtung durch einen in Fig. 1 dargestellten Absatz 33 begrenzt ist. Zwischen den beiden Absätzen 31, 33 ist eine stirnseitige Schrägfläche 32 des Nockens 7 ausgebildet, die ausgehend vom Absatz 31 mit geringerer Höhe zum nachfolgenden Absatz 33 mit größerer Höhe in einem Steigungswinkel β gegenüber der Umfangsrichtung ansteigt. Der durch die Schrägfläche 32 erzeugbare Hub in axialer Richtung beträgt vorzugsweise etwa 1 mm.

In der zeichnerischen Darstellung nach Fig. 2 liegt die Schrägfläche 32 nahe ihres niedrigeren Absatzes 31 der Gleitfläche 18 des Kopfes 28 vom Zapfen 35 gegenüber. Es kann zweckmäßig sein, dies als Betriebsposition vorzusehen. Hierbei ist ein geringer axialer Abstand zwischen der Gleitfläche 18 und der Schrägfläche 32 zu belassen, damit sich die Vorspannkraft zwischen dem Kopf 26 des Zapfens 35 und damit die auf das Rotationswerkzeug 1 einwirkende Vorspannkraft der Spannplatte 19 in Richtung des Pfeiles 34 vollständig ausbilden kann. Alternativ kann es vorteilhaft sein, eine Betriebsposition der Nockenscheibe 6 derart vorzusehen, dass die Gleitfläche 18 des Kopfes 28 in Überdeckung mit der Grundfläche 36 liegt.

Zum Lösen der Spanneinrichtung wird die Nockenscheibe 6 mittels des in die Öffnung 14 eingesteckten Hebels 15 in Richtung des Pfeiles 30 gedreht, wobei die Gleitfläche 18 auf der Schrägfläche 32 des Nockens 7 aufgleitet. Um dieses Aufgleiten zu erleichtern und um auf eine Drehfixierung des Zapfens 35 verzichten zu können, ist die Gleitfläche 18 mit einer Schrägung versehen, die im gezeigten Ausführungsbeispiel als Kegelstumpf ausgeführt ist. Die durch den Kegelstumpf bzw. durch die Kegelform gebildete Schrägung der Gleitfläche 18 weist gegenüber der Umfangsrichtung einen Winkel α auf, der zumindest näherungsweise identisch zum Steigungswinkel β des zugeordneten Nockens 7 ist. Bei Anlage der Gleitfläche 18 am Nocken 7 wird hierdurch ein flächiger bzw. linienförmiger, nicht jedoch punktförmiger Kontakt hergestellt. Es kann aber auch zweckmäßig sein, anstelle der Gleitfläche 18 eine insbesondere wälzgelagerte Rolle vorzusehen, die auf der Schrägfläche 32 abrollt. Durch weitere Drehung der Nockenscheibe 6 in Richtung des Pfeiles 30 drückt die in Gegenrichtung und in axialer Richtung ansteigende Schrägfläche 32 die Gleitfläche 18 und damit den Zapfen 35 in axialer Richtung entgegen den Pfeil 34, wodurch die vorstehend beschriebene Entspannung am Rotationswerkzeug 1 eintritt. Die vollständige, zum Auswechseln des Rotationswerkzeuges 1 vorgesehene Entspannung tritt bei einer Position ein, in der die Schrägfläche 32 im Bereich des Absatzes 33 gegen die Gleitfläche 18 drückt. Zum Auffinden dieser entspannten Position, aber auch zum Auffinden der vorgenannten, gespannten Betriebsposition kann es zweckmäßig sein, entsprechende Anschläge für die Drehbewegung der Nockenscheibe 6 vorzusehen.

## Patentansprüche

1. Schnellwechsel-Spannvorrichtung für ein Rotationswerkzeug (1), insbesondere für ein Kreissägeblatt, umfassend eine Nabe (2) mit einer senkrecht zu einer Drehachse (3) der Nabe (2) liegenden Spannfläche (4) für das Rotationswerkzeug (1), mindestens ein mit einer Vorspannkraft vorgespanntes Spannelement (5) zum Andrücken des Rotationswerkzeuges (1) gegen die Spannfläche (4), sowie eine um die Nabe (2) drehbar gelagerte Nockenscheibe (6) mit mindestens einem axial hervorstehenden, dem Spannelement (5) zugeordneten Nocken (7) zur bedarfsweisen Entspannung des Spannelementes (5), **dadurch gekennzeichnet, dass** die Nockenscheibe (6) eine Umfangsfläche (8) aufweist, wobei die Umfangsfläche (8) mit einer Ansatzeinrichtung (9) für ein Werkzeug (10) zum Drehen der Nockenscheibe (6) versehen ist, und dass eine Blockiereinrichtung (11) zur wahlweisen Verhinderung einer Drehbewegung der Nabe (2) vorgesehen ist.

2. Spannvorrichtung nach Anspruch 1,
**dadurch gekennzeichnet, dass** die Umfangsfläche (8) der Nockenscheibe (6) in radialer Richtung frei liegt.

3. Spannvorrichtung nach Anspruch 1 oder 2,
**dadurch gekennzeichnet, dass** die Ansatzeinrichtung (9) eine insbesondere als Bohrung ausgeführte Öffnung (12) ist, und dass das Werkzeug (10) ein zum Einführen in die Öffnung (12) vorgesehener Hebel (13) ist.

4. Spannvorrichtung nach einem der Ansprüche 1 bis 3,
**dadurch gekennzeichnet, dass** die Nabe (2) zur Bildung der Blockiereinrichtung (11) eine insbesondere als Bohrung ausgeführte Öffnung (14) aufweist, und dass ein in die Öffnung (14) einführbarer Hebel (15) vorgesehen ist.

5. Spannvorrichtung nach einem der Ansprüche 1 bis 4,
**dadurch gekennzeichnet, dass** die Nockenscheibe (6) auf ihrer dem Spannelement (5) gegenüberliegenden Seite zumindest angrenzend an ihre Umfangsfläche (8) und insbesondere vollflächig an einer Stützplatte (16) gleitend anliegt.

6. Spannvorrichtung nach Anspruch 5,
**dadurch gekennzeichnet, dass** die Nockenscheibe (6) und die Stützplatte (16) im wesentlichen zylindrisch mit zumindest näherungsweise gleichen Außendurchmessern (D) ausgeführt sind.

7. Spannvorrichtung nach einem der Ansprüche 1 bis 6,
**dadurch gekennzeichnet, dass** das mindestens eine Spannelement (5) in einem Aufnahmeabschnitt (17) der Nabe (2) gehalten ist, wobei der Aufnahmeabschnitt (17) im wesentlichen zylindrisch ausgeführt ist, und wobei der Aufnahmeabschnitt (17) und die Nockenscheibe (6) einen zumindest näherungsweise gleichen Außendurchmesser (D) aufweisen.

8. Spannvorrichtung nach einem der Ansprüche 1 bis 7,
**dadurch gekennzeichnet, dass** das mindestens eine Spannelement (5) eine gegen den zugeordneten Nocken (7) der Nockenscheibe (6) angedrückte Gleitfläche (18) aufweist.

9. Spannvorrichtung nach Anspruch 8,
**dadurch gekennzeichnet, dass** die Gleitfläche (18) eine Schrägung aufweist und insbesondere als Kegelstumpf ausgeführt ist.

10. Spannvorrichtung nach Anspruch 9,
**dadurch gekennzeichnet, dass** die Schrägung der Gleitfläche (18) einen Winkel (α) zur Umfangsrichtung aufweist, der zumindest näherungsweise gleich einem Steigungswinkel (β) des zugeordneten Nockens (7) zur Umfangsrichtung ist.

11. Spannvorrichtung nach einem der Ansprüche 1 bis 10,
**dadurch gekennzeichnet, dass** das mindestens eine Spannelement (5) als federvorgespannter Zapfen (35) ausgeführt ist.

12. Spannvorrichtung nach einem der Ansprüche 1 bis 11,
**dadurch gekennzeichnet, dass** mehrere und insbesondere drei über den Umfang gleichmäßig verteilte Spannelemente (5) vorgesehen sind.

13. Spannvorrichtung nach einem der Ansprüche 1 bis 12,
**dadurch gekennzeichnet, dass** das mindestens eine Spannelement (5) auf eine der Spannfläche (4) gegenüberliegende, insbesondere zylindrische Spannplatte (19) einwirkt, wobei eine Einspannung des Rotationswerkzeuges (1) zwischen der Spannfläche (4) und der Spannplatte (19) vorgesehen ist.

14. Spannvorrichtung nach Anspruch 13,
**dadurch gekennzeichnet, dass** die Spannplatte (19) einen Zentrierbund (20) für das Rotationswerkzeug (1) aufweist.
